Europäisches Patentamt

European Patent Office

Office européen des brevets

(19)

(11) Veröffentlichungsnummer: **0 100 923**
**B1**

(12) # EUROPÄISCHE PATENTSCHRIFT

(45) Veröffentlichungstag der Patentschrift:
05.02.86

(51) Int. Cl.⁴: **C 01 B 3/50**, B 01 D 53/00

(21) Anmeldenummer: 83107052.9

(22) Anmeldetag: 19.07.83

(54) Verfahren und Vorrichtung zur Zerlegung eines Gasgemisches.

(30) Priorität: 29.07.82 DE 3228363
02.05.83 DE 3315930

(43) Veröffentlichungstag der Anmeldung:
22.02.84 Patentblatt 84/8

(45) Bekanntmachung des Hinweises auf die Patenterteilung:
05.02.86 Patentblatt 86/6

(84) Benannte Vertragsstaaten:
DE FR GB NL

(56) Entgegenhaltungen:
US - A - 4 180 553

CHEMICAL ABSTRACTS, Band 81, Nr. 12, 23. September 1974, Seite 130, Nr. 65669s, Columbus, Ohio, USA YU.K. BAICHTOK et al.: "Diffusion method for the separation of hydrogen in a system for complex separation of purge gases from the synthesis of ammonia"

(73) Patentinhaber: Linde Aktiengesellschaft,
Abraham-Lincoin-Strasse 21, D-6200 Wiesbaden (DE)

(72) Erfinder: Linde, Gerhard, Dr. Ing., Eichleite 50,
D-8022 Grünwald (DE)
Erfinder: Bölt, Manfred, Dipl.-Ing., Malchinger Strasse 16, D-8031 Maisach (DE)
Erfinder: Schmid, Wolfgang, Dipl.-Ing.,
Stümpflingstrasse 13, D-8022 Grünwald (DE)
Erfinder: Burr, Peter, Dr.-Ing., Kandinskystrasse 24, D-8000 München 71 (DE)

(74) Vertreter: Schaefer, Gerhard, Dr., Linde
Aktiengesellschaft Zentrale Patentabteilung,
D-8023 Höllriegelskreuth (DE)

**Beschreibung**

Die Erfindung betrifft ein Verfahren zur Zerlegung eines Gasgemisches, das Wasserstoff sowie mindestens einen weiteren Bestandteil enthält, durch Adsorption oder durch Abkühlung und partielle Kondensation und/oder Rektifikation und/oder Wäsche, sowie eine Vorrichtung zur Durchführung des Verfahrens.

Ein derartiges Gasgemisch fällt beispielsweise als Purgegas bei der Ammoniak- oder Methanolsynthese an. Da das Gasgemisch wertvolle, wiederverwendbare Komponenten, insbesondere Wasserstoff, Argon und Methanol enthält, werden diese aus dem Gasgemisch zurückgewonnen und einer weiteren Verwendung zugeführt bzw. unerwünschte Bestandteile aus dem Gasgemisch abgetrennt.

Soll nur der Wasserstoff zurückgewonnen werden, so werden die übrigen Komponenten des Gasgemisches durch Kondensation und/oder Adsorption von dem Wasserstoff abgetrennt. Sollen dagegen noch andere Komponenten wiedergewonnen werden, dann wird das Gasgemisch einer oder mehreren Trennstufen zugeführt, in denen die einzelnen Bestandteile durch partielle Kondensation und/oder Rektifikatiom und/oder Wäsche abgetrennt und entsprechend ihren unterschiedlichen physikälischen Eigenschaften kopf- oder sumpfseitig entnommen werden. Für die Durchführung des Verfahrens wird in der Regel Fremdkälte benötigt, die vom einem Hochdruck-Kältekreislauf, beispielsweise einem Stickstoff-Kreislauf, geliefert wird.

Der Nachteil dieser Verfahren besteht darin, daß erhebliche Energie für die Erzeugung der notwendigen Kälte bereitgestellt werden muß oder daß die Produktströme nur unter relativ niedrigem Druck gewonnen werden können. Überdies bedingt ein Hochdruck-Kältekreislauf aufwendige Verdichter, Leitungen und Armaturen.

Der vorliegenden Erfindung liegt daher die Aufgabe zugrunde, ein Verfahren der eingangs genannten Art zu entwickeln, das energetisch günstig und mit geringem apparativem Aufwand durchführbar ist.

Diese Aufgabe wird erfindungsgemäß dadurch gelöst, daß zumindest ein Teil des Wasserstoffes vor der Abkühlung bzw. der Adsorption durch Diffusion an semipermeablen Membranen von dem Gasgemisch abgetrennt wird.

Die Abtrennung von Wasserstoff an semipermeablen Membranen ist zwar grundsätzlich bekannt, sie weist jedoch den Hachteil auf, daß der Wasserstoff einen erheblichen Druckverlust beim Durchgang durch die Membranen erleidet, so daß das Verfahren daher als energetisch ungünstig angesehen wurde, insbesondere weil bei einer Ammoiaksynthese der Wasserstoff unter hohem Druck benötigt wird. Erst durch die erfindungsgemäße Kombination zweier Verfahrensschritte, nämlich einer Diffusion und einer Adsorption oder einem Kälteprozeß ist es möglich, jedem Anlagenteil in dem für ihn günstigsten Betriebsbereich einzusetzen, wodurch eine optimale Anpassung an gegebene Randbedingungen ermöglicht wird. Der apparative und der energetische Aufwand für die Zerlegung wird dadurch optimiert.

Das erfindungsgemäße Verfahren ist besonders vorteilhaft, wenn die Bestandteile des zu zerlegendem Gasgemisches Siedetemperaturen von ca. 120 K und darunter aufweisen, weil dann die erzielbaren wirtschaftlichen Vorteile besonders groß sind.

Bei einer bevorzugten Ausgestaltung des erfindungsgemäßen Verfahrens werden bei der Diffusion höchstens 60% des Wasserstoffes von dem Gasgemisch abgetrennt, während der restliche Teil des Wasserstoffes durch partielle Kondensation der übrigem Bestandteile des Gasgemisches abgetrennt wird. Vorzugsweise werdem etwa 20-40%, insbesondere etwa 30% des Wasserstoffes bei der Diffusion abgetrennt. Bei Bedarf wird das Kondensat zur Rückgewinnung einer Komponente, beispielsweise Argon, anschließend rektifiziert.

Durch die relativ niedrige Ausbeuteforderung an die Niederdruckfraktion bei der Diffusion wird die benötigte Menbran-Austauschfläche klein und der Druckverlust, den die Niederdruckfraktion bei der Diffusion erleidet, verhältnismäßig niedrig gehalten. Die wasserstoffarme Hochdruckfraktion wird in einem nachfolgenden Adsorptions- oder Kondensationsprozeß weiter zerlegt. Da bei diesem nachfolgenden Prozeß der Wasserstoffgehalt im Gas bereits relativ niedrig ist, läßt sich der apparative Aufwand gering halten.

Bei einer anderen Ausführungsform des erfindungsgemäßen Verfahrens werden bei der Diffusion mehr als 60% des Wasserstoffes von dem Gasgemisch abgetrennt und wird zumindest einer der in dem restlichen Gasgemisch enthaltenen Bestandteile durch Rektifikation oder Wäsche von den übrigen Bestandteilen abgetrennt.

Bei der Tieftemperaturzerlegung ist der Kältebedarf und damit der Energieeinsatz durch den Partialdruck der kondensierbaren Bestandteile des Gasgemisches bestimmt. Der Partialdruck ist umso höher, je geringer der Wasserstoffanteil in dem Gasgemisch ist. Daher wird erfindungsgemäß noch vor dcm Tieftemperaturprozeß der größte Teil des Wasserstoffes durch Diffusion abgetrennt. Bei der Diffusion tritt zwar ein Energieverlust durch den Druckabfall des Wasserstoffes beim Durchgang durch die semipermeablen Membranen auf, da aber das Gasgemisch, das dann abgekühlt und der Tieftemperaturzerlegung zugeführt wird, weitgehend von Wasserstoff befreit ist, ist zur Gewinnung der kondensierbaren Bestandteile weitaus weniger Energie für die Kälteerzeugung als bisher erforderlich, so daß insgesamt gesehen das Verfahren energetisch günstiger ist.

Das erfindungsgemäße Verfahren weist weiterhin den Vorteil auf, daß für die Kälteerzeugung ein Mitteldruck-Kältekreislauf ausreichend ist, so daß das Verfahren mit kleineren Verdichtern als bisher auskommt.

Bei einer bevorzugten Weiterbildung des erfindungsgemäßen Verfahrens wird das restliche Gasgemisch nach Abtrennung des Wasserstoffes arbeitsleistend entspannt und mit verflüssigtem Gas aus dem Sumpf der Rektifikation in Wärmetausch gebracht.

Das wasserstoffarme Restgasgemisch verläßt die Diffusionseinrichtung nahezu ohne Druckverlust, so daß hier ein Gasstrom mit hohem Druckpotential zur Verfügung steht. Dieser Gasstrom wird arbeitsleistend entspannt, wobei die für die Durchführung des nachfolgenden Tieftemperaturprozesses benötigte Kälte erzeugt wird. Der Abgasstrom aus der Turbine wird in Wärmetausch mit dem verflüssigten Gas aus dem Sumpf einer Rektifizierkolonne gebracht, das dabei zumindest teilweise verdampft. Gleichzeitig wird bei dem Wärmetausch zumindest ein Teil des Restgasgemisches verflüssigt.

Mit dieser Verfahrensführung ist es ermöglicht, die Rückverdampfung, die für die Rektifikation unerläßlich ist, mit Hilfe eines ohnehin zur Verfügung stehenden Gasstromes durchzuführem. Die Emtspannung im der Entspamnungsmaschine wird bis zu einem Druckniveau durchgeführt, bei dem die Verdampfung der Sumpfflüssigkeit gewährleistet ist. Der für die Kälteerzeugung und Rückverdampfung bisher übliche Hochdruckkreislauf kamn durch einem Kreislauf mit weitaus geringerem Druckniveau ersetzt werden.

Gemäß einer bevorzugten Ausgestaltung des erfindungsgemäßen Verfahrens wird Sumpfflüssigkeit aus einer Trennstufe zur Zerlegung des restlichen Gasgemisches bei unteratmosphärischem Druck verdampft.

Insbesondere ist es von Vorteil, wenn das Verdampfen durch Wärmezufuhr aus einem Kältekreislauf, der zugleich zur Kühlung der Trennstufe herangezogen wird, erfolgt.

Durch die Druckabsenkung kann auch der Druck des Kältekreislaufs niedriger gewählt werden. In dem Kältekreislauf zirkuliert beispielsweise Stickstoff, der bei diesem Wärmetausch verflüssigt wird. Der Unterdruck liegt beispielsweise in der Größenordnung von 0,1 bis 0,5 bar.

In weiterer Ausgestaltung des erfindungsgemäßen Verfahrens wird vorgeschlagen, daß das in dem Kältekreislauf geführte Fluid Bestandteil des restlichen Gasgemisches ist.

Es erweist sich als vorteilhaft, wenn in Weiterbildung des erfindungsgemäßen Verfahrens der unteratmosphärische Druck durch Strahlverdichtung mittels dem gasförmigen Anteil des teilweise verflüssigtem restlichen Gasgemisches als Treibstahl erzeugt wird.

Vor der Strahlverdichtung wird der gasförmige Anteil angewärmt. Der Unterdruck-Gasstrom wird bei der Strahlverdichtung auf etwa Atmosphärendruck rückverdichtet.

Insbesondere ist es von Vorteil, wenn das im Kreislauf geführte Medium den Trennstufen am Kopf zugeführt wird. Das verflüssigte Kreislaufmedium wird dabei als Rücklaufflüssigkeit und/oder zur indirekten Kopfkühlung in dem Trennstufen verwendet.

Das erfindungsgemäße Verfahren ist besonders zweckmäßig, wenn das Gasgemisch ein Purge-Gas aus einer Gassynthese ist. Beispiele solcher Gassynthesen sind die Ammoniaksynthese oder die Methanolsynthese.

In dem speziellen Fall einer Ammoniaksynthese enthält das mit dem erfindungsgemäßen Verfahren zu zerlegende Gasgemisch als wesentliche Bestandteile neben Wasserstoff noch Methan, Stickstoff und/oder Kohlenmonoxid und Argon.

Eine Vorrichtung zur Durchführung des erfindungsgemäßen Verfahrens umfaßt eine Zuführungsleitung für ein Gasgemisch, die mindestens eine Wärmetauscheinrichtung oder einem Adsorber enthält und die in eine Trennsäule mündet, und ist dadurch gekennzeichnet, daß vor der Wärmetauscheinrichtung bzw. dem Adsorber eine auf Wasserstoff selektiv wirkende Diffusionseinrichtung angeordnet ist.

Die Erfindung sowie weitere Einzelheiten der Erfindung werden anhand von schematisch dargestellten Ausführungsbeispielen näher erläutert.

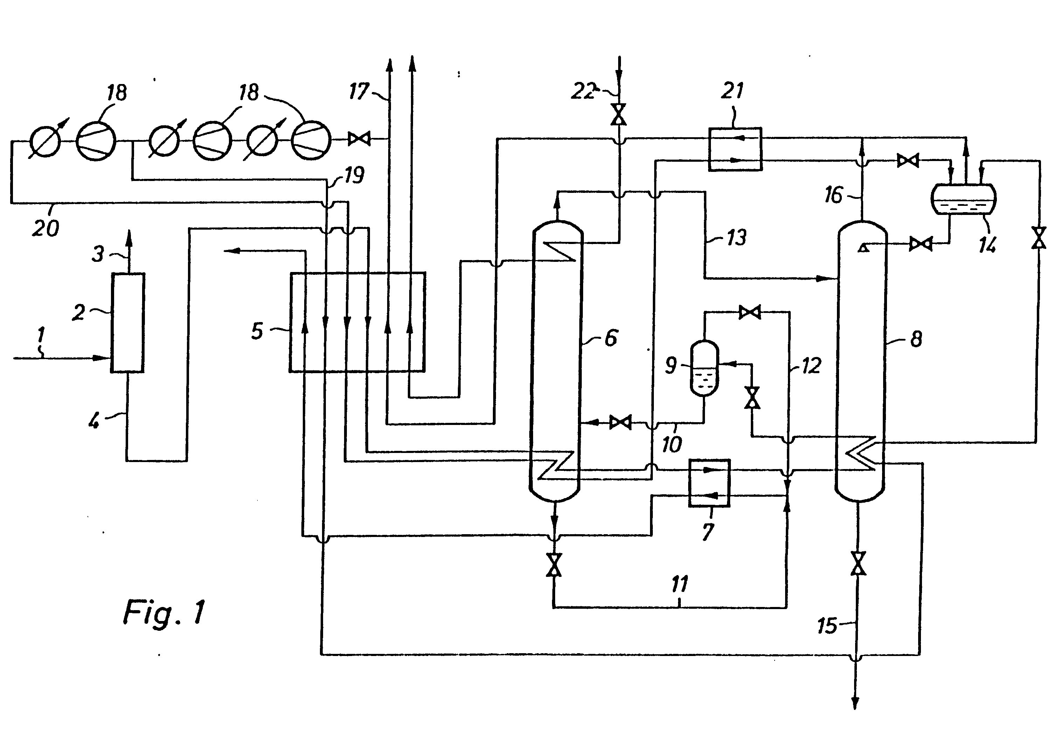

Hierbei zeigen die Figuren 1 bis 4 verschiedene Ausführungsformen des erfindungsgemäßen Verfahrens am Beispiel der Zerlegung eines Purge-Gases aus der Ammoniak-Synthese.

Bei dem Verfahren gemäß Figur 1 soll ein Purge-Gas 1 (590 Nm$^3$/h) zerlegt werden, das eine Zusammensetzung von beispielsweise 62% Wasserstoff, 20% Stickstoff, 11% Methan und 7% Argon, einen Druck von ca. 140 bar und eine Temperatur von 35°C aufweist. In einer Trenneinrichtung 2, die semipermeable Membranen enthält, die für Wasserstoff durchlässig sind, wird der Wasserstoff 3 vom Purge-Gas abgetrennt. Der Druck des Wasserstoffs 3, der mit einer Reinheit von etwa 91% vorliegt, beträgt noch ca. 24 bar.

Das wasserstoffarme Rohgas 4 (7% Wasserstoff, 50% Stickstoff, 27% Methan, 16% Argon mit ca. 138 bar und 35°C) wird nun einer Tieftemperaturzerlegung zugeführt. Die Gasmenge beträgt nur noch etwa 35% der ursprünglichen Purgegas-Menge, so daß die Tieftemperaturanlage wesentlich kleiner und billiger ausgeführt sein kann.

In einem Wärmetauscher 5 wird das Rohgas in Wärmetausch mit einem Stickstoff-Kältekreislauf sowie mit Restgas aus der Tieftemperaturzerlegung auf etwa 150 K abgekühlt. Das gekühlte Rohgas wird anschließend durch Beheizung des Sumpfes einer ersten Trennsäule 6 sowie in einem Wärmetauscher 7 und durch Beheizung einer zweiten Trennsäule 8 weiter bis auf etwa 95 K abgekühlt. Das kalte Gas wird entspannt und dabei teilweise verflüssigt. In einem Abscheider 9 wird der flüssige Anteil von dem gasförmigen abgetrennt und über eine Leitung 10 in die erste Trennsäule 6 entspannt. Die Trennsäule 6 wird bei einem Druck von 2 bar betrieben.

In der Trennsäule 6, deren Kopf durch flüssigen Stickstoff 22 gekühlt ist, wird das Methan sumpfseitig von dem Stickstoff und Argon abgetrennt, die über den Kopf der Trennsäule 6 gasförmig entnommen werden (Leitung 13). Das Methan 11 wird zusammen mit der gasförmigen Fraktion 12 aus dem Abscheider 9 in den Wärmetauschern 7 und 5 angewärmt und aus der Anlage entfernt.

Das Stickstoff-Argon-Gemisch wird der Trennsäule 8 zugeführt, die bei einem Druck von 1,3 bar betrieben wird. Durch die bereits erfolgte Abtrennung des Wasserstoffes in der Trenneinrichtung 2 kann die Abtrennung des Argon bereits bei einer relativ hohen Temperatur durchgeführt werden. Die Trennsäule 8 wird mit flüssigem Stickstoff aus einem Vorratsbehälter 14 beaufschlagt. Das Argon wird sumpfseitig über Leitung 15 aus der Trennsäule 8 entnommen (47 Nm$^3$/h mit ca. 91 K). Über den Kopf der Trennsäule 8 wird Stickstoff 16 entnommen und in einen Stickstoff-Kältekreislauf eingespeist, bei dem Stickstoff aus dem Vorratsbehälter 14 in einen Wärmetauscher 21 gegen Kreislaufstickstoff und im Wärmetauscher 5 gegen das Rohgas 4 und Kreislaufstickstoff angewärmt und in einen dreistufigen Verdichter 18 auf etwa 25 bis 30 bar verdichtet wird. Eine dem über das Purge-Gas zugeführten Stickstoff entsprechende Stickstoffmenge wird über Leitung 17 entnommen. Mitteldruckstickstoff 19 von der zweiten und Hochdruckstickstoff von der dritten Verdichterstufe werden beide im Wärmetauscher 5 abgekühlt. Der Hochdruckstickstoff 20 dient zur Beheizung des Sumpfes der ersten Trennsäule 6 und wird, nach Abkühlung im Wärmetauscher 21, in den Vorratsbehälter 14 entspannt. Der Mitteldruckstickstoff 19 dient zur Beheizung des Sumpfes der zweiten Trennsäule 8 und wird ebenfalls in den Vorratsbehälter 14 entspannt.

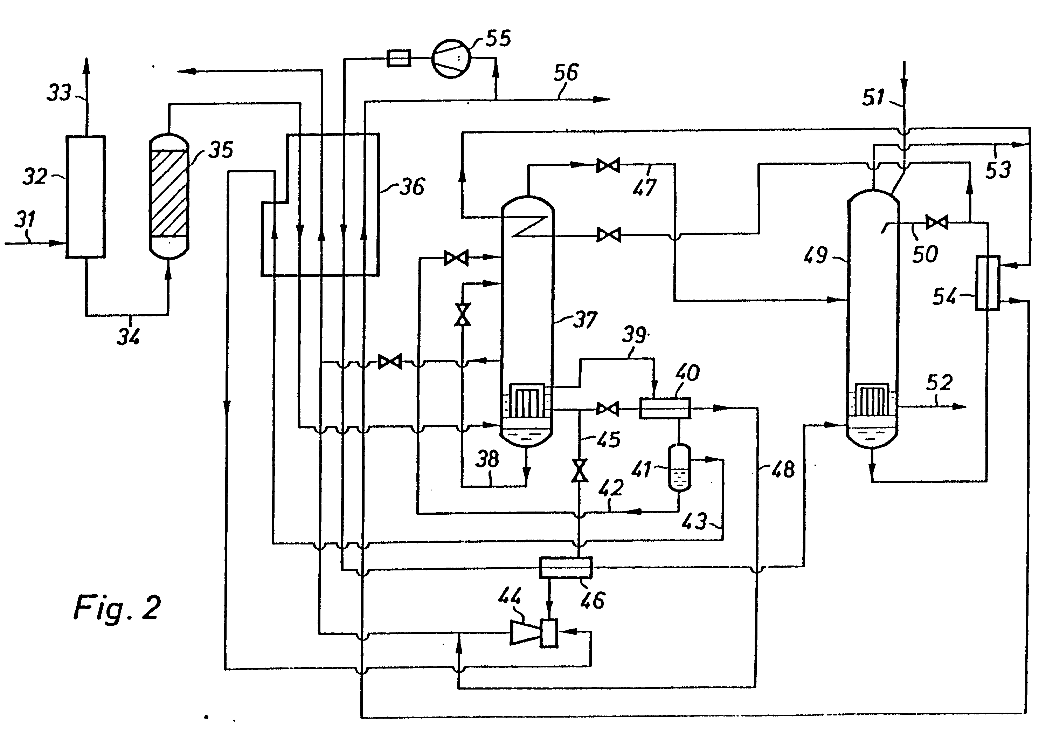

Figur 2 zeigt ein modifiziertes Verfahren gemäß Figur 1. Purge-Gas 31 aus einer Ammoniak-Synthese wird in einer Trenneinrichtung 32 durch Diffusion an semipermeablen Membranen in Wasserstoff 33 und ein wasserstoffarmes Purge-Gas 34 zerlegt (beispielsweise 2.400 Nm³/h mit einem Druck größer gleich 40 bar). Eventuelle Spuren von Ammoniak und Wasser werden in einem Feinreiniger 35 entfernt. In einem Wärmetauscher 36 wird das Purge-Gas abgekühlt und einem Kondensatorverdampfer im Sumpf einer ersten Trennsäule 37 zugeführt, in welchem das Purge-Gas teilweise komdensiert. Der verflüssigte Anteil 38 wird der Trennsäule 37 zugeführt, die bei einem Druck von ca. 2 bar betrieben wird. Der gasförmige Anteil 39 wird nach Abkühlung in einem Wärmetauscher 40 in Wärmetausch mit entspannter Säulensumpfflüssigkeit, bei dem ein Teil des Gases auskomdensiert, einem Abscheider 41 zugeführt, in dem eine flüssige Fraktion 42, die ebenfalls in die Trennsäule 37 geleitet wird, von einer gasförmigen Fraktion 43, die im wesentlichen Restwasserstoff und Stickstoff enthält, getrennt wird. Aus der Trennsäule 37 wird sumpfseitig Methan entnommen, während über den Kopf der Trennsäule 37 ein im wesentlichen Stickstoff und Argon enthaltendes Gasgemisch entnommen wird (Leitung 47).

Die Gasfraktion 43, die einen Druck von ca. 35 bar aufweist, wird in einem Teil des Wärmetauschers 36 auf etwa 180 K angewärmt und zum Antrieb eines Strahlverdichters 44 verwendet, der einen Teil des Methans 45 aus dem Sumpf der Trennsäule 37 ansaugt und auf etwa Atmosphärendruck rückverdichtet. Das Methan wird zuvor bei einem Druck von ca. 0,3 bar in einem Wärmetauscher 46 gegen Kreislaufstickstoff verdampft. Das restliche Methan 48 aus der Trennsäule 37 wird im Treibstrahl hinter dem Strahlverdichter 44 zugemischt und gemeinsam mit diesem nach Anwärmung im Wärmetauscher 36 zugeführt.

Das Gas 47 vom Kopf der ersten Trennsäule 37 wird einer zweiten Trennsäule 49 zugeführt, in der Argon (sumpfseitig) und Stickstoff (kopfseitig) voneinander getrennt werden. Die Trennsäule 49 wird mit flüssigem Stickstoff 50 aus dem Stickstoff-Kältekreislauf beaufschlagt. Bei Bedarf, d.h. wenn flüssiges Argon entnommem wird, wird zusätzlicher flüssiger Stickstoff, beispielsweise aus einer Luftzerlegungsanlage, über Leitung 51 zugeführt.

Aus dem Sumpf der Trennsäule 49 werden etwa 300 Hm³/h Argon flüssig entnommen (Leitung 52). Sofern das Argon gasförmig benötigt wird, kann der zusätzliche flüssige Stickstoff 51 entfallen.

Auch bei dieser Ausführungsform ist der Kältebedarf für die Argonabtrennung wegen der vorher erfolgten Abtrennung des Wasserstoffes relativ gering.

Vom Kopf der Trennsäule 49 wird Stickstoff 53 entnommen und dem Stickstoff-Kältekreislauf zugeführt, bei dem Stickstoff in einem Wärmetauscher 54 gegen Kreislauf-Stickstoff und im Wärmetauscher 36 gegen Kreislaufstickstoff und PurgeGas angewärmt, in einem Verdichter 55 auf etwa 9 bar verdichtet, nach Abführung der Kompressionswärme im Wärmetauscher 36 abgekühlt, im Wärmetauscher 46 gegen verdampfendes Methan weiter abgekühlt und verflüssigt und zur Beheizung des Sumpfes der Trennsäule 49 verwendet wird. Der flüssige Stickstoff wird im Wärmetauscher 54 unterkühlt umd zum Teil auf die Trennsäule 49 aufgegeben, in der er für den notwendigen Umsatz dh. Rücklauf sorgt, un zum Teil nach Entspannung auf etwa 1,5 bar zur indirekten Kühlung des Kopfes der Trennsäule 37 verwendet, um dort den notwendigen Rücklauf zu erzeugen. Stickstoffabgas aus dem Kreislauf wird über Leitung 56 abgelassen.

Durch die Verdampfung des Methans bei Unterdruck im Wärmetauscher 46 genügt es, den Stickstoff im Gegensatz zu dem in Figur 1 beschriebenen Verfahren nur auf einen Druck von ca. 9 bar zu verdichten.

Die Kälteverluste der Anlage werden allein durch den Joule- Tompson-Effekt des Rohgases (Entspannung von ca. 40 auf 1 bar) gedeckt, wenn das produzierte Argon gasförmig gewonnen wird. Hauptvorteil gegenüber dem üblichen Konzept ist dabei, daß der übliche Stickstoff-Kreislauf wegen des nur mehr niedrigen Druckes von 9 bar (gegenüber bisher mindestens 25 bis 30 bar) mit einem vergleichsweise billigen Turbo- oder Schraubenverdichter arbeiten kann, anstelle des sonst üblichen teuren Kolbenverdichters. Dabei ist der Energiebedarf ca. 30% geringer.

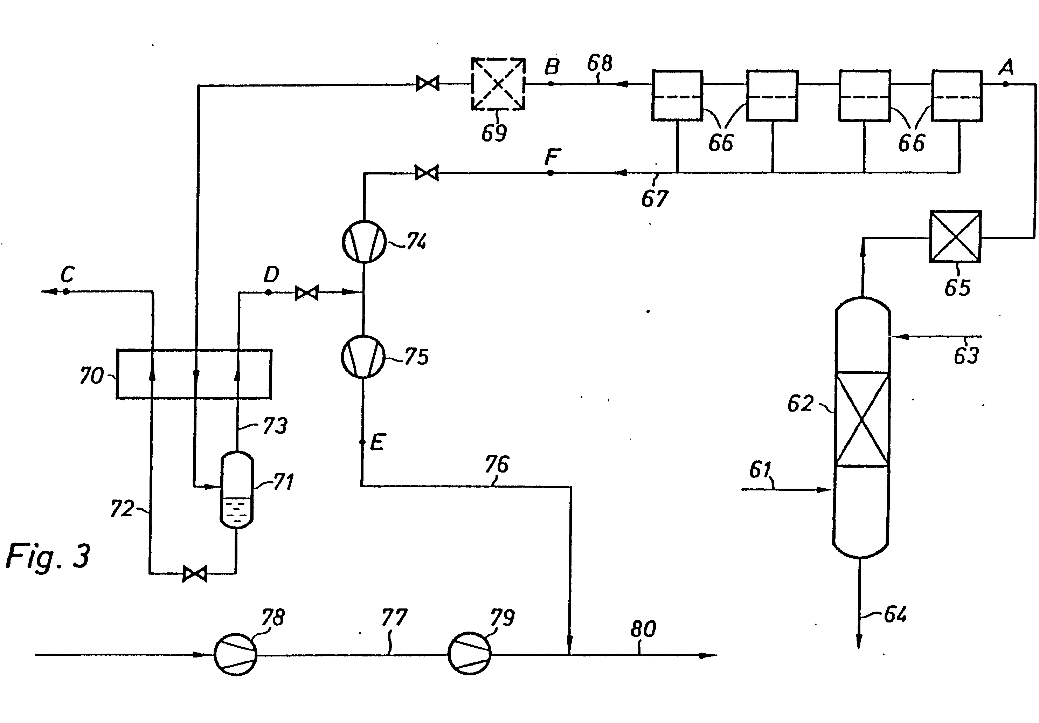

Figur 3 zeigt ein Verfahren zur Rückgewinnung von Wasserstoff aus dem Rohgas einer Ammoniaksynthese. Das Rohgas 61 wird in eine Waschsäule 62 geleitet, die mit Wasser 63 beaufschlagt ist. Die Wasserwäsche dient zur Entfernung von Ammoniak aus dem Rohgas, das im Wasser gelöst über Leitung 64 aus der Waschsäule 62 abgeführt wird. Das Rohgas verläßt die Waschsäule 62 über Kopf und wird durch einen Trockner 65 geleitet, in dem restliches Wasser aus dem Rohgas entfernt wird. Die charakteristischen Daten des Rohgases nach dem Trockner 65 am Punkt A sind in Tabelle 1 angegeben.

Das Rohgas wird in eine Diffusionseinrichtung 66 geleitet, die aus vier parallel durchströmten Einheiten gebildct ist Die Diffusionseinrichtung 66 enthält semipermeable Membranen, die für Wasserstoff durchlässig sind. Auf der Niederdruckseite der Diffusionseinrichtumg 66 wird eine wasserstoffreiche Fraktion 67 mit relativ niedrigem Druck, auf der Druckseite der Diffusionseinrichtung 66 eine wasserstoff arme Fraktion 68 mit relativ höherem Druck gewonnen. Die charakteristischen Daten der Gasströme 67, 68 an den Punkten B, F sind in Tabelle 1 zusammengestellt.

Der Trockner 65 kann statt vor auch nach der Diffusionseinrichtung 66 in der Leitung 68 angeordnet sein (gestrichelte Darstellung ; Bezugszeichen 69. Da ein großer Teil des Wassers im Membranprozeß abgetrennt wird und überdies an dieser Stelle die Gasmenge kleiner ist, kann bei dieser Anordnung der Trockner wesentlich kleiner ausgeführt sein.

Der Gasstrom 68 wird in einem Wärmetauscher 70 abgekühlt, wobei insbesondere die relativ hochsiedenden Bestandteile des Gasgemisches außer dem Wasserstoff kondensiert werden. In einem nachfolgenden Abscheider 71 wird das Kondensat von dem wasserstoffreichen Dampf abgetrennt. Sowohl das aus dem Sumpf des Abscheiders 71 entnommene Kondensat 72 als auch der gasförmig verbliebene Anteil 73 werden in Gegenstrom zu dem Gasstrom 68 durch den Wärmetauscher 70 geführt. Die charakteristischen Daten dieser beiden Ströme an den Punktem C, D sirnd in Tabelle 1 zusammemgestellt.

Der Wasserstoff 73 wird mit dem Wasserstoff 67 aus der Diffusionseinrichtung 66, welcher zuvor mittels Verdichter 74 auf den benötigtem Druck gebracht worden ist, vermischt und das entstandene Gemisch in einem Verdichter 75 auf 130 bar verdichtet. Die charakteristischen Daten am Punkt E sind in Tabelle 1 aufgeführt. Der verdichtete Gasstrom 76 wird schließlich mit einem Gasstrom 77 des Syntheseprozesses, der im wesentlichen Wasserstoff und Stickstoff enthält, vermischt. Der Gasstrom 77 ist zuvor in zwei Verdichtern 78, 79 von ca. 25 auf zunächst ca. 70 und dann auf 130 bar verdichtet worden. Das entstandene Gasgemisch 80 wird einer Ammoniaksyntheseanlage zugeführt, die in der Zeichnung nicht dargestellt ist. Mit dem erfindungsgemäßen Verfahren wird eine Ausbeute von 91,6% erzielt.

Die Verdichter 74 und 75 können entfallen, wenn das Gas 76 vor dem Verdichter 78 oder vor dem Verdichter 79 in den Gasstrom 77 eingeleitet wird.

Der Energiebedarf für dieses Verfahren mit dem in Tabelle 1 angegebemen Zahlenwertem beträgt 34,1 KW bzw. 83,6 KW, je nachdem, ob die Verdichter 74, 75 enthalten sind oder nicht. Würde die Wasserstoff-Wiedergewinnung bei vergleichbarer Wasserstoffreinheit und Wasserstoffausbeute ausschließlich durch Diffusiom erfolgen, so würde der Energiebedarf etwa 126 KW betragen.

**Tabelle 1**

|          | A     | B     | C     | D     | E     | F    |
|----------|-------|-------|-------|-------|-------|------|
| Nm³/H    | 3821  | 2996  | 1342  | 1654  | 2479  | 825  |
| Bar      | 140,6 | 126,5 | 1,5   | 110,0 | 130,0 | 82,6 |
| K        | 305   | 305   | 295   | 295   | 305   | 305  |
| Mol% H₂  | 62,2  | 55,5  | 14,8  | 88,6  | 88,0  | 87,0 |
| N₂       | 20,9  | 24,7  | 43,8  | 9,1   | 8,5   | 7,2  |
| CH₄      | 10,7  | 12,6  | 27,4  | 0,7   | 1,7   | 3,7  |
| Ar       | 6,1   | 7,2   | 14,0  | 1,6   | 1,8   | 2,1  |

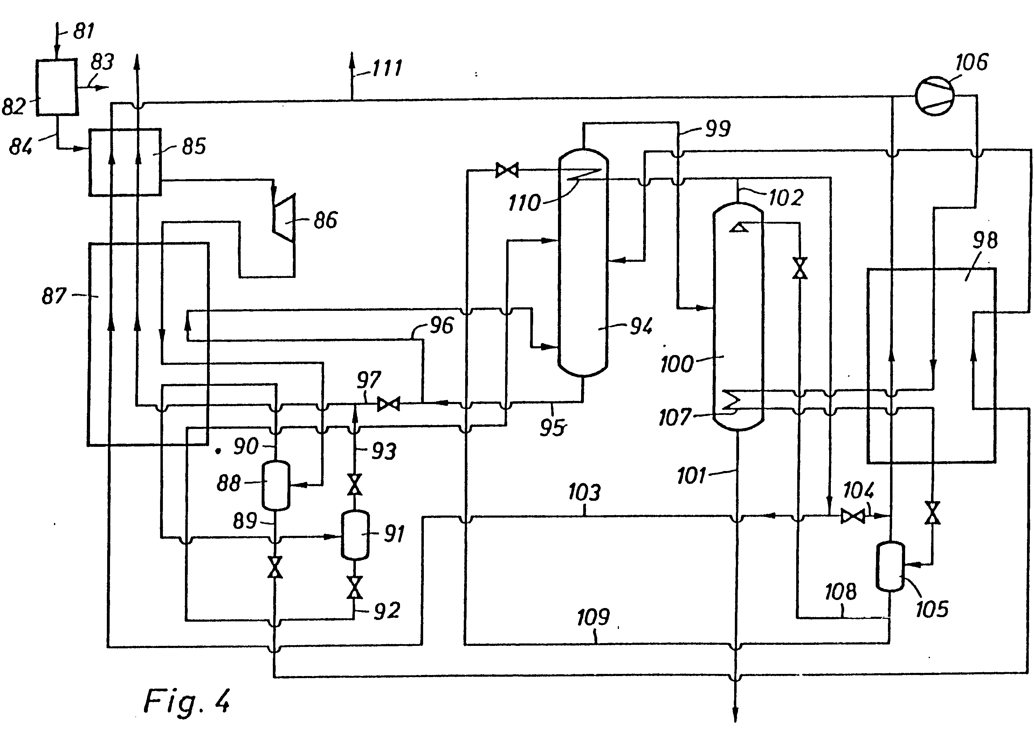

Bei dem Verfahren gemäß Figur 4 wird ein Purgegas 81 einer Ammoniaksynthese mit einer Zusammensetzung von beispielsweise 62% $H_2$, 20% $N_2$, 11% $CH_4$ und 7% Ar mit einer Temperatur von 35°C und einem Druck von 140 bar einer Diffusionseinrichtung 82, die semipermeable Membranen enthält, zugeführt. In der Diffusionseinrichtung 82 wird der größte Teil des Wasserstoffes 83 vom dem Gasgemisch abgetrennt. Das verbleibende, wasserstoffarme Gasgemisch 84, das die Diffusionseinrichtung 82 verläßt, weist eine Zusammensetzung von ca. 13% $H_2$, 52% $N_2$, 10% Ar und 25% $CH_4$ auf. Sein Druck beträgt etwa 128 bar. Das Gasgemisch 84 wird in einem Wärmetauscher 85 in Wärmetausch mit Zerlegungsprodukten auf ca. 200 K abgekühlt und in einer Entspannungsturbime 86 bis auf einen Druck von 85 bis 50 bar, vorzugsweise ca. 35 bar entspannt. Das Gasgemisch kühlt sich dabei auf ca. 145 K ab.

Das Abgas aus der Turbine 86 wird in einen Wärmetauscher 87 geleitet, in dem es in Wärmetausch mit Zerlegungsprodukten weiter abgekühlt wird. Insbesondere wird dieser Gasstrom in Wärmetausch mit einem später noch näher beschriebenen verflüssigten Gas 96 aus dem Sumpf einer Rektifizierkolonne 94 gebracht, das dabei mindestens teilweise verdampft wird.

Der bei dem Wärmetausch teilweise verflüssigte Gasstrom aus der Turbine 86 wird an einer Zwischenstelle aus dem Wärmetauscher 87 entnommen und einem Abscheider 88 zugeführt in dem das gebildete Kondensat 89 (ca. 23% $CH_4$, 11% Ar, 52% $N_2$) von dem gasförmig verbliebenen Anteil 90 (im wesentlichen $H_2$) abgetrennt wird. Der gasförmige Anteil 90 wird an einer Zwischenstelle in den Wärnetauscher 87 zurückgeführt und im Wärmetausch mit Zerlegungsprodukt sowie Kondensat 92 aus einem Abscheider 91 weiter abgekühlt und in den Abscheider 91 geleitet. Das dort abgeschiedene Kondensat 92 (ca. 10% $CH_4$, 10% Ar und 73% $N_2$) wird im Wärmetauscher 87 partiell verdampft und in die Rektifikationskolonne 94 geleitet. Der gasförmige Anteil 93 (ca. 91% $H_2$) aus dem Abscheider 91 wird zusammen mit einem Teil 97 des Sumpfproduktes der Rektifikationskolonne 94 in den Wärmetauschern 87 und 85 angewärmt und aus der Anlage abgezogen. Das Kondensat 89 aus dem Abscheider 88 wird in einem Wärmetauscher 98 im Wärmetausch mit Kreislaufstickstoff partiell verdampft und in die Rektifikationskolonne 94 eingeleitet. Dort findet eine Zerlegung in eine methanreiche flüssige Sumpffraktion, die über Leitung 95 entnommen wird, und eine wasserstoff- und argonreiche gasförmige Kopffraktion, die über Leitung 99 entnommen wird' statt- Ein Teilstrom der Sumpfflüssigkeit wird im Wärmetauscher 87 in Wärmetausch mit dem Abgasstrom der Turbine 86 verdampft und in die Rektifikationskolonne 94 zurückgeleitet.

Der stickstoff-und argonreiche Strom 99 wird einer zweiten Rektifikationskolonne 100 zugeführt, in der diese beiden Komponenten voneinander getrennt werden. Flüssiges Argon (99,99%) wird über Leitung 101 entnommen. Gasförmiger Stickstoff (92,7% mit ca. 7,2% $H_2$) wird über Kopf abgezogen (Leitung 102). Der Stickstoff wird einem Kreislauf zugeführt, wobei ein Teil des Stickstoffes (Leitung 103) durch die Wärmetauscher 87 und 85 geführt wird, während ein anderer Teil des Stickstoffes (Leitung 104) zusammen mit gasförmigem Stickstoff aus einem Stickstoffvorratstank 105 durch den Wärmetauscher 98 geführt wird. Die beiden StickstoffTeilströme werden nach ihrem jeweiligen Wärmetausch miteinander wiedervereinigt und gemeinsam in einem Kreislaufverdichter 106 von etwa 1 bar auf 8 bar verdichtet. Der verdichtete Stickstoff wird nach Abkühlung im Wärmetauscher 98 in Wärmetausch mit Stickstoff 104 und Kondensat 98 einem Aufkocher 107 im Sumpf der Rektifikationskolonne 100 zugeführt und, nach weiterer Abkühlung im Wärmetauscher 98, im den Vorratstank 105 entspannt.

Flüssiger Stickstoff aus dem Vorratstank 105 wird einerseits (Leitung 108) als Rücklaufflüssigkeit auf die Rektifikationskolonne 100 und andererseits (Leitung 109) zur Kühlung des Kopfkühlers 110 der Rektifikationskolonne 94 verwendet. Der Stickstoff aus dem Kopfkühler 110 wird mit dem Stickstoffprodukt 102 aus der Rektifikationskolonne 100 vermischt. Überschüssiger Stickstoff wird über Leitung 111 entnommen.

## Patentansprüche

1. Verfahren zur Zerlegung eines Gasgemisches, das Wasserstoff sowie mindestens einen weiteren Bestandteile enthält, bei dem ein Teil des Wasserstoffes durch Diffusion mittels semipermeabler Membranen von dem Gasgemisch abgetrennt und das verbleibende Gasgemisch abgekühlt und weiter zerlegt wird, dadurch gekennzeichnet, daß bei der Diffusion zwischen 20 und 60% des Wasserstoffes abgetrennt werden, während der restliche Teil des Wasserstoffes durch partielle Kondensation der übrigen Bestandteile des Gasgemisches abgetrennt wird.

2. Verfahren nach Anspruch 1, dadurch gekennzeichnet, daß das Gasgemisch nach der Diffusion durch Beheizung des Sumpfes von zumindest einer Trennsäule zur weiteren Zerlegung des Gasgemisches abgekühlt wird.

3. Verfahren nach Anspruch 1 oder 2, dadurch gekennzeichnet, daß das Gasgemisch nach der Diffusion durch einen Feinreiniger (35) geleitet wird.

4. Verfahren nach einem der Ansprüche 1 bis 3, dadurch gekennzeichnet, daß das Gasgemisch nach der Diffusion arbeitsleistend entspannt wird.

5. Verfahren nach einem der Ansprüche 1 bis 4, dadurch gekennzeichnet, daß das Gasgemisch ein Purgegas aus einer Gassynthese ist.

6. Verfahren nach einem der Ansprüche 1 bis 5, dadurch gekennzeichnet, daß das Gasgemisch neben Wasserstoff noch Argon, Methan und/oder Stickstoff und/oder Kohlenmonoxid als weitere tiefsiedende Bestandteile enthält.

7. Verfahren nach einem der Ansprüche 1 bis 6, dadurch gekennzeichnet, daß der abgetrennte Wasserstoff einer Ammoniaksynthese zugeführt wird.

## Claims

1. A process for separating a gas mixture which contains hydrogen and at least one further component, in which a part of the hydrogen is separated from the gas mixture by diffusion using semipermeable membranes and the residual gas mixture is cooled and further separated, characterised in that during the diffusion, between 20 and 60% of the hydrogen is separated, whilst the remainder of the hydrogen is separated by partial condensation of the remaining components of the gas mixture.

2. A process as claimed in Claim 1, characterised in that after the diffusion, the gas mixture is cooled by heating the sump of at least one separating column for the further separation thereof.

3. A process as claimed in Claim 1 or Claim 2, characterised in that after the diffusion, the gas mixture is passed through a fine cleaner (35).

4. A process as claimed in one of Claims 1 to 3, characterised in that after the diffusion, the gas mixture is expanded with the performance of work.

5. A process as claimed in one of Claims 1 to 4, characterised in that the gas mixture is a purge gas from a gas synthesis plant.

6. A process as claimed in one of Claims 1 to 5, characterised in that in addition to hydrogen, the gas mixture also contains argon, methane and/or nitrogen and/or carbon monoxide as further low-boiling point components.

7. A process as claimed in one of Claims 1 to 6, characterised in that the separated hydrogen is fed to an ammonia synthesis plant.

**Revendications**

1.- Procèdè de séparation d'un mélange de gaz qui contient de l'hydrogène ainsi qu'an moins temps un autre constituant, dans lequel une partie de l'hydrogène est séparé par diffusion du mélange de gaz au moyen de membranes semi-perméables et le mélange de gaz restant est refroidi tandis que l'on poursuit la séparation, caractérisé en ce que, lors de la diffusion, on sépare entre 20 et 60% d'hydrogène tandis que la partie restante de l'hydrogène est sèparée par condensation partielle des autres constituants du mélange de gaz.

2.- Procédé selon la revendication 1, caractérisé en ce que, après la diffusion, le mélange de gaz est refroidi par chauffage de la cuve d'au moins une colonne de séparation pour la poursuite de la séparation du mélange de gaz.

3.- Procédé selon la revendication 1 ou 2, caractèrisé en ce que le mélange de gaz est amenè, aprés la diffusion, à travers un séparateur fin (35).

4.- Procèdé selon l'une quelconque des revendications 1 à 3, caractérisé en ce que le mélange de gaz est détendu avec production de travail après la diffusion.

5.- Procèdé selon l'une quelconque des revendications 1 à 4, caractèrisé en ce que le mélange de gaz est le gaz de purge d'un gaz de synthèse.

6.- Procèdè selon l'une quelconque des revendications 1 à 5, caractérisé en ce que, outre l'hydrogène, le mélange de gaz contient encore de l'argon, du méthane et/ou de l'azote et/ou du monoxyde de carbone comme autre constituant à bas point d'ébullition.

7.- Procédé selon l'une quelconque des revendications 1 à 6, caractérisé en ce que l'hydrogène séparé est amené vers une synthèse de l'ammoniac.

0 100 923

Fig. 1

Fig. 2

Fig. 3

0 100 923

Fig. 4

0 100 923